# EUROPÄISCHE PATENTSCHRIFT

(11) **EP 3 464 896 B1**
(45) Veröffentlichungstag und Bekanntmachung des Hinweises auf die Patenterteilung: **21.09.2022**
(21) Anmeldenummer: 17715919.1
(22) Anmeldetag: 06.04.2017
(51) Int. Cl.: F16C 33/16, F03D 80/70, F03D 15/20, F03D 9/25, F16C 25/02, F16C 17/26, F16C 33/18

(54) **WINDENERGIEANLAGE**
WIND TURBINE
ÉOLIENNE

(30) Priorität: 27.05.2016 DE 102016209206
(43) Veröffentlichungstag der Anmeldung: 10.04.2019
(73) Patentinhaber: Wobben Properties GmbH, 26607 Aurich (DE)
(72) Erfinder: MTAUWEG, Samer, 27568 Bremerhaven (DE)
(74) Vertreter: Eisenführ Speiser
(86) Internationale Anmeldenummer: PCT/EP2017/058226
(87) Internationale Veröffentlichungsnummer: WO 2017/202533

(56) Entgegenhaltungen:
- EP-A1- 2 568 167
- WO-A1-2013/182583
- DE-A1-102009 053 879
- US-A1- 2013 071 246
- US-A1- 2014 169 952
- US-A1- 2015 017 000

## Beschreibung

Die vorliegende Erfindung betrifft eine Windenergieanlage, mit einem oder mehreren Rotorblättern, einer Rotornabe, an welcher das oder die Rotorblätter montiert sind, und einem Generator zur Erzeugung elektrischer Energie, wobei der Generator einen Generatorstator und einen mit der Rotornabe drehfest verbundenen, um eine Achse rotierbaren Generatorläufer aufweist, wobei die Rotornabe und der Generatorläufer drehfest verbunden sind.

Windenergieanlagen der vorstehenden Art sind allgemein bekannt. Sie werden benutzt, um die Rotationsbewegung der Rotornabe, die infolge des Umstreichens der Rotorblätter mit Wind entsteht, in elektrische Energie zu wandeln.

Hierbei kommt der Hauptlagerung der Rotornabe und des Generators eine wichtige Bedeutung zu. Die Hauptlagerung ist infolge der Rotationsbewegung und der Windlast axialen und auch radialen Belastungen ausgesetzt. Es haben sich im Laufe der Jahre vielfältige Lagerkonzepte in der Praxis etabliert oder auch nicht etabliert. Beispiele aus dem Stand der Technik werden in US 2013/071246, EP 2 568 167 und US 2014/169952 offenbart. In jüngerer Vergangenheit ist beispielsweise die Verwendung einer Hauptlagerung mit nur einem Lagerabschnitt zunehmend populär geworden, wobei in dem Lagerabschnitt ein oder mehrere Momentenlagerungen eingesetzt werden. Wenngleich der Vorteil einer Momentenlagerung als sehr tragfähige Lösung mit hoher Fähigkeit zur Aufnahme axialer Kräfte, radialer Kräfte und zur Aufnahme von Kippmomenten unbestritten ist, besteht dennoch ein Bedarf, alternative Lagerkonzepte zu ermitteln, die insbesondere einen guten Kompromiss aus Langlebigkeit, Wartungsaufwand, akustischem Dämpfungsverhalten und Kosteneffizienz erfordern.

Vor diesem Hintergrund lag der Erfindung die Aufgabe zugrunde, eine Windenergieanlage dahingehend zu verbessern, dass die vorstehend gennannten Vorteile in möglichst weitem Umfang erreicht werden. Insbesondere lag der Erfindung die Aufgabe zugrunde, eine Windenergieanlage anzugeben, bei der das Hauptlagerkonzept hinsichtlich der vorstehend genannten Eigenschaften verbessert wird.

Die Erfindung löst die ihr zugrunde liegende Aufgabe bei einer Windenergieanlage der eingangs bezeichneten Art, indem die Windenergieanlage nach Anspruch 1 ausgebildet ist. Insbesondere weist bei der erfindungsgemäßen Windenergieanlage der erste Lagerabschnitt ein erstes Radialgleitlager und ein erstes Axialgleitlager auf, und der zweite Lagerabschnitt weist ein zweites Radialgleitlager und ein zweites Axialgleitlager auf. Die Erfindung macht sich die Erkenntnis zunutze, dass gegenüber Lagerungen mit nur einem Lagerabschnitt eine bessere Aufteilung der Kräfte erreicht wird. Insbesondere hat sich als Vorteil herausgestellt, dass die Aufteilung der axialen Kräfte auf die beiden Lagerabschnitte mit ihren jeweils dedizierten Axiallagern geringeren Lagerverschleiß mit sich bringt. Im Vergleich zu konventionellen Lagerungen wie beispielsweise Momentenlagern oder Fest-Los-Lagerungen besteht ein weiterer Vorteil darin, dass die Kippmomente, insbesondere in Form von Nick- und Giermomenten, die auf den Rotor wirken, besser isoliert in axiale und radiale Kraftanteile von den beiden Lagern abgestützt werden können. In der Regel ist die Zweilagerlösung weniger empfindlich gegenüber Giermomenten des Rotors im Vergleich zu dem Momentenlager.

Die Erfindung wird vorteilhaft weitergebildet, indem das erste und zweite Radiallager jeweils einen Gleitbelag aufweisen, wobei die Gleitbeläge des ersten und zweiten Radialgleitlagers auf einem gemeinsamen ersten Lagerring angeordnet sind, welcher vorzugsweise ein Innenring ist. Die Radiallager sind vorzugsweise auf separaten Absätzen mit gleichen oder unterschiedlichen Durchmessern auf dem Innenring angeordnet.

In einer weiteren bevorzugten Ausführungsform weist die Windenergieanlage eine Gondel mit einem fest installierten Maschinenträger auf, und der erste Lagerring ist fest mit dem Maschinenträger verbunden. Gegenüber einer konventionellen Ausgestaltung mit einem Achszapfen, auf dem jeweils in zwei Lagerabschnitten dezidierte Wälzlager oder Gleitlager mit eigenen Lagerringen montiert werden müssen, stellt diese Ausführungsform eine signifikante konstruktive Vereinfachung dar, indem der erste Lagerring die Gleitbeläge sowohl für den ersten Lagerabschnitt als auch für den zweiten Lagerabschnitt direkt trägt.

Weiter vorzugsweise weisen das erste und zweite Axiallager jeweils ein Gleitlager auf, wobei vorzugsweise die Gleitbeläge einander zugewandt sind, und wobei der Gleitbelag des ersten Axialgleitlagers an einem Flansch des ersten Lagerrings angeordnet ist. Durch die Anordnung des Gleitbelags des ersten Axiallagers an einem Flansch wird mittels der Befestigung des Flansches am ersten Lagerring eine recht einfache Justierung des axialen Lagerspiels ermöglicht, indem beispielsweise zwischen dem Flansch und dem Ring Distanzscheiben verwendet werden.

In einer ersten bevorzugten Alternative ist der Gleitbelag des zweiten Axialgleitlagers an dem Maschinenträger angeordnet. Alternativ dazu ist vorzugsweise der Flansch ein erster Flansch, und der erste Lagerring weist einen in Richtung der Achse gegenüberliegend angeordneten zweiten Flansch auf, wobei der Gleitbelag des zweiten Axialgleitlagers an dem zweiten Flansch angeordnet ist.

Die Windenergieanlage gemäß der Erfindung weist vorzugsweise einen zweiten Lagerring auf, welcher vorzugsweise ein Außenring ist, und welcher drehfest mit dem Generatorläufer verbunden ist. In einer bevorzugten Ausgestaltung weist der zweite Lagerring in dem ersten Lagerabschnitt einen sich radial nach innen erstreckenden ersten Kragen auf, und in dem zweiten Lagerabschnitt einen sich radial nach innen erstreckenden zweiten Kragen, wobei der erste Kragen mit dem ersten Axiallager und dem ersten Radiallager zusammenwirkt, und wobei der zweite Kragen mit dem zweiten Axiallager und dem zweiten Radiallager zusammenwirkt. Der Kragen ist vorzugsweise zumindest abschnittsweise als umlaufende ringförmige Scheibe ausgebildet, die nach innen vom zweiten Lagerring vorsteht.

In einer bevorzugten Ausgestaltung weist der erste Kragen einen radial ausgerichteten ersten Oberflächenabschnitt auf, der gleitend auf dem Gleitbelag des ersten Radiallagers läuft, und einen axial ausgerichteten zweiten Oberflächenabschnitt, der gleitend auf dem Gleitbelag des ersten Axiallagers läuft.

Weiter vorzugsweise weist der zweite Kragen einen radial ausgerichteten ersten Oberflächenabschnitt auf, der gleitend auf dem Gleitbelag des zweiten Radiallagers läuft, und einen axial ausgerichteten zweiten Oberflächenabschnitt, der gleitend auf dem Gleitbelag des zweiten Axiallagers läuft.

Weiter vorzugsweise bestehen der erste und/oder zweite Kragen, insbesondere die Oberflächenabschnitte des ersten und/oder zweiten Kragens, teilweise oder vollständig aus einem metallischen Werkstoff. Vorzugsweise ist die Rauheit der Oberflächenabschnitte an dem ersten und/oder zweiten Kragen mit einer Oberflächenrauheit Rₐ von 1,0 µm oder weniger, vorzugsweise 0,8 µm oder weniger ausgebildet. Die Oberflächenrauheit kann in allgemein bekannter Weise festgestellt werden, beispielsweise nach DIN EN ISO 4287:2010.

Als metallischer Werkstoff wird vorzugsweise jeweils Messing, eine Messinglegierung, Weißmetall, etwa Blei, Zinn, Antimon, Wismut, Kupfer, eine Kupferlegierung, insbesondere eine Kupfer-Blei-Gusslegierung, eine Bronze-Gusslegierung, insbesondere Bleibronze, eine Bleibronze-Gusslegierung, eine Blei-Zinn-Gusslegierung, Aluminium, eine Aluminiumlegierung, insbesondere eine Aluminium-Zinn-Gusslegierung, eine Aluminium-Zink-Gusslegierung, Stahl, eine Stahllegierung, ein Sintermetall, oder eine Kombination aus mehreren davor genannten metallischen Werkstoffen verwendet.

Alternativ zu einem rein metallischen Werkstoff wird vorzugsweise ein Metall-Verbundwerkstoff verwendet, etwa ein keramisch-metallischer Verbundwerkstoff (Cermet), oder ein Metall-Kunststoffverbundmaterial.

Alternativ wird vorzugsweise für die Gleitflächen ein, insbesondere nichtmetallischer, Werkstoff wie beispielsweise Sinterkeramik (die als Bestandteil bspw. Metalloxide aufweisen können), ein Hochleistungskunststoff wie etwa ein thermoplastisches Hochleistungspolymer, insbesondere ein amorphes thermoplastisches Hochleistungspolymer, zum Beispiel Polyamidimid (PAI), gegebenenfalls mit Graphit- und/oder PTFE-Zusatz, verwendet.

Die Radialgleitlager und/oder die axialen Gleitlager der erfindungsgemäßen Hauptlagerung sind vorzugsweise als hydrodynamische Gleitlager ausgebildet.

Die Gleitbeläge sind vorzugsweise jeweils teilweise oder vollständig aus einem Faserverbundwerkstoff ausgebildet. Weiter vorzugsweise sind auf einer, mehreren oder sämtlichen Gleitflächen eine Anzahl von Gleitschichten aus jeweils einem der folgenden Materialien aufgetragen:
- Polytetrafluorethylen,
- expandiertes Polytetrafluorethylen,
- Molybdaendisulfid,
- Graphit,
- Graphen, oder einer Kombination aus mehreren dieser Materialien.

Werden nichtmetallische Werkstoffe für die Gleitflächen verwendet, ist vorzugsweise eine Anzahl der gleitschichten aus einem aufgedampften metallischen Werkstoff ausgebildet.

Weiter vorzugsweise weist der Faserverbundwerkstoff Fasermaterial auf, ausgewählt aus der Liste bestehend aus: Kohlenstofffasern, Glasfasern, Stahlfasern, Bambusfasern, oder einer Kombination aus mehreren dieser Materialien.

Das Matrixmaterial des faserverstärkten Faserverbundwerkstoffs ist vorzugsweise ein Polymerwerkstoff, beispielsweise ein thermoplastisches oder duroplastisches Polymer, insbesondere duroplastisches Epoxidharz.

Die Erfindung wird nachfolgend unter Bezugnahme auf die beigefügten Figuren anhand eines bevorzugten Ausführungsbeispiels näher erläutert. Hierbei zeigen:
- Figur 1: eine schematische räumliche Ansicht einer Windenergieanlage gemäß der vorliegenden Erfindung, und
- Figur 2: eine schematische Querschnittansicht zu der Gondel der Windenergieanlage gemäß Figur 1.

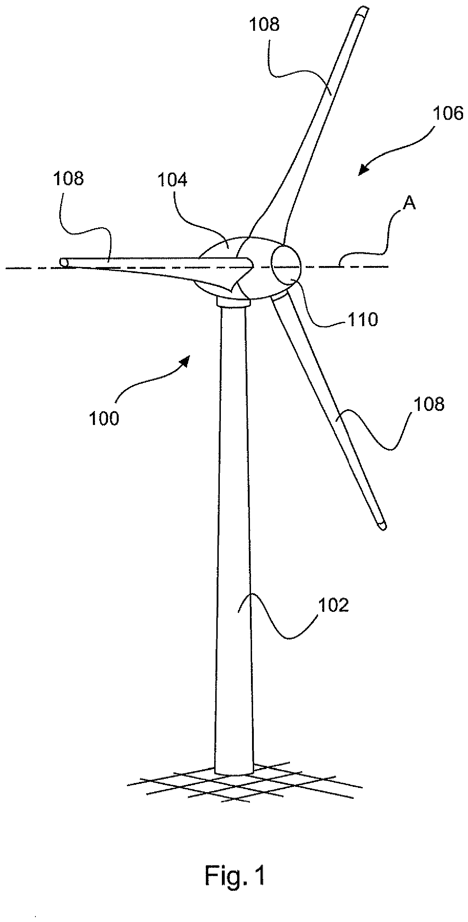

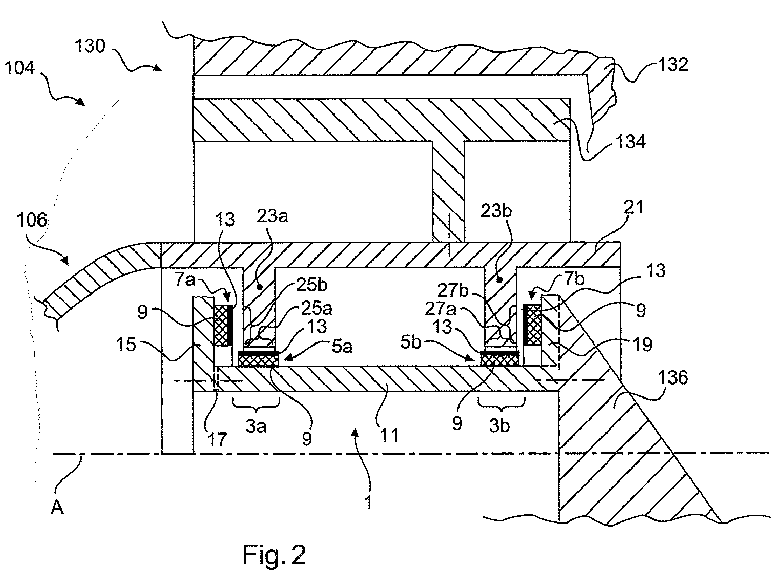

Figur 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der Rotor 106 wird im Betrieb der Windenergieanlage 100 mittels des Windes in eine Drehbewegung versetzt und dreht hierdurch einen Generator-Rotor oder -Läufer eines Generators (siehe Figur 2), welcher direkt oder indirekt mit dem Rotor 106 gekoppelt ist. Der Generator, welcher vorzugsweise ein langsam drehender Synchrongenerator ist, ist in der Gondel 104 angeordnet und erzeugt elektrische Energie. Die Pitchwinkel der Rotorblätter 108 sind vorzugsweise mittels Pitchmotoren an den Rotorblattwurzeln bei den Rotorblättern 108 veränderbar. Der Rotor 106 und die Rotorblätter 108 sind um eine Rotationsachse A drehbar mittels einer Hauptlagerung 1 gelagert, die in Figur 2 näher dargestellt ist.

Die in Fig. 2 gezeigte Hauptlagerung 1 weist einen ersten Lagerabschnitt 3a und einen dazu in Richtung der Achse A beabstandet angeordneten zweiten Lagerabschnitt 3b auf. Die Hauptlagerung 1 weist in dem ersten Lagerabschnitt 3a ein erstes Radiallager 5a und ein erstes Axiallager 7a auf, die jeweils als Gleitlager ausgebildet sind, vorzugsweise als hydrodynamische Gleitlager. In dem zweiten Lagerabschnitt 3b weist die Hauptlagerung ein zweites Radiallager 5b und ein zweites Axiallager 7b auf, die vorzugsweise ebenfalls jeweils als Gleitlager ausgebildet sind, vorzugsweise als hydrodynamische Gleitlager.

Das erste und zweite Radiallager 5a, 5b weisen jeweils Gleitbeläge 9 auf, die an einem ersten Lagerring 11 befestigt oder ausgebildet sind. Die Gleitbeläge 9 sind vorzugsweise teilweise der vollständig aus einem faserverstärkten Verbundwerkstoff, beispielsweise glasfaserverstärktem Kunststoff (GFK) ausgebildet und weisen vorzugsweise eine Anzahl von reibungsmindernden Oberflächenschichten 13 auf. Die Axiallager 7a, 7b weisen vorzugsweise ebenfalls Gleitbeläge 9 auf, die teilweise oder vollständig aus einem faserverstärkten Verbundwerkstoff ausgebildet sind und eine Anzahl von Oberflächenschichten 13 zur Reibminderung aufweisen.

Das erste Axiallager 7a ist vorzugsweise an einem ersten Flansch 15 angeordnet bzw. ausgebildet, der reversibel lösbar mit dem ersten Lagerring verbunden ist. Besonders bevorzugt ist zur Einstellung des axialen Lagerspiels der Hauptlagerung 1 ein Distanzstück 17 zwischen dem ersten Flansch 15 und dem ersten Lagerring 11 angeordnet.

Das zweite Axiallager ist vorzugsweise an einem zweiten Flansch 19 angeordnet bzw. ausgebildet. Der zweite Flansch 19 ist optional an dem ersten Lagerring 11 oder dem Maschinenträger 136 ausgebildet oder daran befestigt.

Die Hauptlagerung 1 weist zusätzlich zu dem ersten Lagerring 11 einen zweiten Lagerring 21 auf, vorzugsweise ausgebildet als Außenring. Der zweite Lagerring 21 ist zum einen drehfest mit dem Rotor 106 verbunden, und zum anderen drehfest mit dem Läufer 134 des Generators 130.

Der zweite Lagerring 21 weist in dem ersten Lagerabschnitt 3a einen ersten sich radial nach innen erstreckenden Kragen 23a auf, der mit dem ersten Radiallager 5a und dem ersten Axiallager 7a der Hauptlagerung 1 zusammenwirkt. An dem ersten Kragen 23a ist ein radial ausgerichteter erster Oberflächenabschnitt 25a ausgebildet, der mit dem Gleitbelag 9 des ersten Radiallagers 5a zum Ausbilden einer Gleitlagerung kooperiert. Ferner ist an dem ersten Kragen 23a ein zweiter Oberflächenabschnitt 25b ausgerichtet, der axial ausgerichtet ist und mit dem Gleitbelag 9 des ersten Axiallagers 7a eine Gleitlagerung ausbildet.

Analog weist der zweite Lagerring 21 einen zweiten radial nach innen erstreckten Kragen 23b auf, der sich in zweiten Lagerabschnitt 3b befindet. Der zweite Kragen 23b weist einen ersten Oberflächenabschnitt 27a auf, der radial ausgerichtet ist und mit dem Gleitbelag 9 des zweiten Radiallagers 5b ein Gleitlager ausbildet. Ferner weist der zweite Kragen 23b einen zweiten, axial ausgerichteten Oberflächenabschnitt 27b auf, der mit dem Gleitbelag 9 des zweiten Axiallagers 7b ein Gleitlager ausbildet.

Die Oberflächenabschnitte 25a,b und 27a,b sind vorzugsweise aus einem metallischen Werkstoff ausgebildet und weisen Oberflächenrauigkeit Rₐ von 1.0 µm oder weniger, vorzugsweise 0,8 µm oder weniger auf.

In vorzugsweisen Ausgestaltungen können an den Oberflächenabschnitten 25a,b, 27a,b metallische Einsätze in die Kragen 23a,b eingelassen sein, die nach Erreichen eines vorbestimmten Grenzverschleißes gewechselt werden können.

Die Gleitbeläge 9 der Gleitlager 5a,b, 7a,b sind vorzugsweise in Form von segmentierten Gleitlagerbelägen ausgebildet und jeweils reversibel lösbar mit den sie aufnehmenden Körpern 11, 15, 19 verbunden, um bei Erreichen eines vorbestimmten Grenzverschleißes gewechselt werden so können.

## Patentansprüche

1. Windenergieanlage (100), mit
einem oder mehreren Rotorblättern (108), einer Rotornabe (106), an welcher das oder die Rotorblätter montiert sind, und
einem Generator (130) zur Erzeugung elektrischer Energie, wobei der Generator einen Generatorstator (132) und einen mit der Rotornabe drehfest verbundenen, um eine Achse rotierbaren Generatorläufer (134) aufweist,
wobei die Rotornabe und der Generatorläufer eine gemeinsame Hauptlagerung (1) aufweisen, welche in zwei voneinander in Richtung der Achse beabstandete Lagerabschnitte (3a, 3b) unterteilt ist,
**dadurch gekennzeichnet, dass** der erste Lagerabschnitt (3a) ein erstes Radialgleitlager (5a) und ein erstes Axialgleitlager (7a) aufweist, und der zweite Lagerabschnitt (3b) ein zweites Radialgleitlager (5b) und ein zweites Axialgleitlager (7b) aufweist.

2. Windenergieanlage nach Anspruch 1,
wobei das erste und zweite Radialgleitlager (5a, b) jeweils einen Gleitbelag (9) aufweisen, und wobei die Gleitbeläge des ersten und zweiten Radialgleitlagers auf einem gemeinsamen ersten Lagerring (11) angeordnet sind, welcher vorzugsweise ein Innenring ist.

3. Windenergieanlage nach Anspruch 2,
wobei wie Windenergieanlage eine Gondel (104) mit einem fest installierten Maschinenträger (136) aufweist, und der erste Lagerring (11) fest mit dem Maschinenträger verbunden ist.

4. Windenergieanlage nach einem der vorstehenden Ansprüche,
wobei das erste und zweite Axialgleitlager (7a, b) jeweils einen Gleitbelag (9) aufweisen, wobei vorzugsweise die Gleitbeläge einander zugewandt sind, und
wobei der Gleitbelag (9) des ersten Axialgleitlagers (7a) an einem Flansch (15) des ersten Lagerrings (11) angeordnet ist.

5. Windenergieanlage nach Anspruch 4,
wobei der Gleitbelag (9) des zweiten Axialgleitlagers (7b) an dem Maschinenträger (136) angeordnet ist.

6. Windenergieanlage nach Anspruch 4,
wobei der Flansch (15) ein erster Flansch ist, und der erste Lagerring (11) einen in Richtung der Achse A gegenüberliegend angeordneten zweiten Flansch (19) aufweist, und wobei der Gleitbelag (9) des zweiten Axialgleitlagers (7) an dem zweiten Flansch (19) angeordnet ist.

7. Windenergieanlage nach einem der vorstehenden Ansprüche,
wobei die Hauptlagerung (1) einen zweiten Lagerring (21) aufweist, welcher vorzugsweise ein Außenring ist, und welcher drehfest mit dem Generatorläufer (132) verbunden ist.

8. Windenergieanlage nach Anspruch 7,
wobei der zweite Lagerring (21) in dem ersten Lagerabschnitt (3a) einen sich radial nach innen erstreckenden ersten Kragen (23a) und in dem zweiten Lagerabschnitt (3b) einen sich radial nach innen erstreckenden zweiten Kragen (23b) aufweist,
wobei der erste Kragen (23a) mit dem ersten Axialgleitlager (7a) und dem ersten Radialgleitlager (5a) zusammenwirkt, und der zweite Kragen (23b) mit dem zweiten Axialgleitlager (7b) und dem zweiten Radialgleitlager (5b) zusammenwirkt.

9. Windenergieanlage nach Anspruch 8,
wobei der erste Kragen (23a) einen radial ausgerichteten ersten Oberflächenabschnitt (25a) aufweist, der gleitend auf dem Gleitbelag des ersten Radialgleitlagers (5b) läuft, und einen axial ausgerichteten zweiten Oberflächenabschnitt (27b) aufweist, der gleitend auf dem Gleitbelag des ersten Axialgleitlagers (7b) läuft.

10. Windenergieanlage nach Anspruch 8 oder 9,
wobei der zweite Kragen einen radial ausgerichteten ersten Oberflächenabschnitt (27a) aufweist, der gleitend auf dem Gleitbelag des zweiten Radialgleitlagers (5b) läuft, und einen axial ausgerichteten zweiten Oberflächenabschnitt (27b) aufweist, der gleitend auf dem Gleitbelag des zweiten Axialgleitlagers (7b) läuft.

11. Windenergieanlage nach einem der vorstehenden Ansprüche,
wobei die Radialgleitlager und/oder die Axialgleitlager als hydrodynamische Gleitlager ausgebildet sind.

12. Windenergieanlage nach einem der Ansprüche 2 bis 11,
wobei die Gleitbeläge (9) jeweils teilweise oder vollständig aus einem Faserverbundwerkstoff ausgebildet sind.

13. Windenergieanlage nach Anspruch 12,
wobei auf einem, mehreren oder sämtlichen Gleitbelägen eine Anzahl von Gleitschichten aus jeweils einem der folgenden Materialien aufgetragen ist:
- Polytetrafluorethylen,
- expandiertes Polytetrafluorethylen,
- Molybdaendisulfid,
- Graphit,
- Graphen,
- aufgedampfter metallischer Werkstoff,
oder einer Kombination aus mehreren dieser Materialien.

14. Windenergieanlage nach einem der Ansprüche 12 oder 13, wobei der Faserverbundwerkstoff Fasermaterial aufweist, ausgewählt ist aus der Liste bestehend aus:
- Kohlenstofffasern,
- Glasfasern,
- Stahlfasern,
- Bambusfasern, oder
einer Kombination aus mehreren dieser Materialien.

## Claims

1. A wind power installation (100) comprising
one or more rotor blades (108), a rotor hub (106) to which the rotor blade or blades are mounted, and
a generator (130) for generating electrical power, wherein the generator has a generator stator (132) and a generator rotor (134) which is non-rotatably connected to the rotor hub and which is rotatable about an axis,
wherein the rotor hub and the generator rotor have a common main bearing means (1) which is subdivided into two bearing portions (3a, 3b) which are spaced from each other in the direction of the axis,
**characterised in that** the first bearing portion (3a) has a first radial plain bearing (5a) and a first axial plain bearing (7a) and the second bearing portion (3b) has a second radial plain bearing (5b) and a second axial plain bearing (7b).

2. A wind power installation according to claim 1
wherein the first and second radial plain bearings (5a, 5b) each have a plain bearing lining (9) and wherein the plain bearing linings of the first and second radial plain bearings are arranged on a common first bearing ring (11) which is preferably an inner ring.

3. A wind power installation according to claim 2
wherein the wind power installation has a pod (104) having a fixedly installed machine carrier (136) and the first bearing ring (11) is fixedly connected to the machine carrier.

4. A wind power installation according to one of the preceding claims
wherein the first and second axial plain bearings (7a, b) each have a plain bearing lining (9), wherein preferably the plain bearing linings face towards each other and wherein the plain bearing lining (9) of the first axial plain bearing (7a) is arranged at a flange (15) of the first bearing ring (11).

5. A wind power installation according to claim 4
wherein the plain bearing lining (9) of the second axial plain bearing (7b) is arranged at the machine carrier (136).

6. A wind power installation according to claim 4
wherein the flange (15) is a first flange and the first bearing ring (11) has a second flange (19) arranged in opposite relationship in the direction of the axis (A) and wherein the plain bearing lining (9) of the second axial plain bearing (7) is arranged at the second flange (19).

7. A wind power installation according to one of the preceding claims
wherein the main bearing means (1) has a second bearing ring (21) which is preferably an outer ring and which is non-rotatably connected to the generator rotor (132).

8. A wind power installation according to claim 7
wherein the second bearing ring (21) in the first bearing portion (3a) has a radially inwardly extending first collar (23a) and in the second bearing portion (3b) it has a radially inwardly extending second collar (23b), wherein the first collar (23a) cooperates with the first axial plain bearing (7a) and the first radial plain bearing (5a) and the second collar (23b) cooperates with the second axial plain bearing (7b) and the second radial plain bearing (5b).

9. A wind power installation according to claim 8
wherein the first collar (23a) has a radially oriented first surface portion (25a) which runs in sliding relationship on the plain bearing lining of the first radial plain bearing (5b) and an axially oriented second surface portion (27b) which runs in sliding relationship on the plain bearing lining of the first axial plain bearing (7b).

10. A wind power installation according to claim 8 or claim 9
wherein the second collar has a radially oriented first surface portion (27a) which runs in sliding relationship on the plain bearing lining of the second radial plain bearing (5b) and an axially oriented second surface portion (27b) which runs in sliding relationship on the plain bearing lining of the second axial plain bearing (7b).

11. A wind power installation according to one of the preceding claims
wherein the radial plain bearing and/or the axial plain bearing are in the form of hydrodynamic plain bearings.

12. A wind power installation according to one of claims 2 to 11
wherein the plain bearing linings (9) are each partially or completely made from a fibre composite material.

13. A wind power installation according to claim 12
wherein applied to one, more or all plain bearing linings is a number of plain bearing layers each comprising one of the following materials:
- polytetrafluorethylene,
- expanded polytetrafluorethylene,
- molybdum disulphide,
- graphite,
- graphene,
- vapour-deposited metallic material,
or a combination of a plurality of said materials.

14. A wind power installation according to one of claims 12 and 13
wherein the fibre composite material has fibre material selected from the list consisting of:
- carbon fibres,
- glass fibres,
- steel fibres,
- bamboo fibres, or
a combination of a plurality of said materials.

## Revendications

1. Eolienne (100) comportant
une ou plusieurs pales de rotor (108), un moyeu de rotor (106), sur lequel la ou les pales de rotor sont montées, et
un générateur (130) pour produire de l'énergie électrique, dans laquelle le générateur présente un stator de générateur (132) et un induit de générateur (134) relié de manière solidaire en rotation au moyeu de rotor, pouvant tourner autour d'un axe,
dans laquelle le moyeu de rotor et l'induit de générateur présentent un support principal (1) commun, lequel se divise en deux segments de palier (3a, 3b) tenus à distance l'un de l'autre en direction de l'axe,
**caractérisée en ce que** le premier segment de palier (3a) présente un premier palier lisse radial (5a) et un premier palier lisse axial (7a), et le second segment de palier (3b) présente un second palier lisse radial (5b) et un second palier lisse axial (7b).

2. Eolienne selon la revendication 1,
dans laquelle le premier et le second palier lisse radial (5a, b) présentent respectivement une garniture de glissement (9), et dans laquelle les garnitures de glissement du premier et du second palier lisse radial sont disposées sur une première bague de palier (11) commune, laquelle est de préférence une bague intérieure.

3. Eolienne selon la revendication 2,
dans laquelle l'éolienne présente une nacelle (104) avec un porte-machine (136) installé de manière solidaire, et la première bague de palier (11) est reliée de manière solidaire au porte-machine.

4. Eolienne selon l'une quelconque des revendications précédentes,
dans laquelle le premier et le second palier lisse axial (7a, b) présentent respectivement une garniture de glissement (9), dans laquelle de préférence les garnitures de glissement sont tournées l'une vers l'autre, et
dans laquelle la garniture de glissement (9) du premier palier lisse axial (7a) est disposée sur un flasque (15) de la première bague de palier (11).

5. Eolienne selon la revendication 4,
dans laquelle la garniture de glissement (9) du second palier lisse axial (7b) est disposée sur le porte-machine (136).

6. Eolienne selon la revendication 4,
dans laquelle le flasque (15) est un premier flasque, et la première bague de palier (11) présente un deuxième flasque (19) disposé de manière à faire face en direction de l'axe A, et dans laquelle la garniture de glissement (9) du second palier lisse axial (7) est disposée sur le deuxième flasque (19).

7. Eolienne selon l'une quelconque des revendications précédentes,
dans laquelle le support principal (1) présente une deuxième bague de palier (21), laquelle est de préférence une bague extérieure et laquelle est reliée de manière solidaire en rotation à l'induit de générateur (132).

8. Eolienne selon la revendication 7,
dans laquelle la deuxième bague de palier (21) présente dans le premier segment de palier (3a) un premier rebord (23a) s'étendant radialement vers l'intérieur et, dans le second segment de palier (3b), un second rebord (23b) s'étendant radialement vers l'intérieur, dans laquelle le premier rebord (23a) coopère avec le premier palier lisse axial (7a) et le premier palier lisse radial (5a), et le second rebord (23b) coopère avec le second palier lisse axial (7b) et le second palier lisse radial (5b).

9. Eolienne selon la revendication 8,
dans laquelle le premier rebord (23a) présente un premier segment de surface (25a) orienté radialement, qui se déplace par glissement sur la garniture de glissement du premier palier lisse radial (5b), et un second segment de surface (27b) orienté axialement, qui se déplace par glissement sur la garniture de glissement du premier palier lisse axial (7b).

10. Eolienne selon la revendication 8 ou 9,
dans laquelle le second rebord présente un premier segment de surface (27a) orienté radialement, qui se déplace par glissement sur la garniture de glissement du second palier lisse radial (5b),
et un second segment de surface (27b) orienté axialement, qui se déplace par glissement sur la garniture de glissement du second palier lisse axial (7b) .

11. Eolienne selon l'une quelconque des revendications précédentes,
dans laquelle les paliers lisses radiaux et/ou les paliers lisses axiaux sont réalisés en tant que paliers lisses hydrodynamiques.

12. Eolienne selon l'une quelconque des revendications 2 à 11,
dans laquelle les garnitures de glissement (9) sont réalisées respectivement en partie ou en totalité à partir d'un matériau composite à base de fibres.

13. Eolienne selon la revendication 12,
dans laquelle est appliqué, sur une, plusieurs ou toutes les garnitures de glissement, un nombre de couches lisses composées respectivement d'un des matériaux suivants :
- polytétrafluoroéthylène,
- polytétrafluoroéthylène expansé,
- disulfure de molybdène,
- graphite,
- graphène,
- matériau métallique déposé en phase vapeur,
ou une combinaison de plusieurs desdits matériaux.

14. Eolienne selon l'une quelconque des revendications 12 ou 13, dans laquelle le matériau composite à base de fibres présente un matériau à base de fibres choisi parmi la liste constituée de :
- fibres de carbone,
- fibres de verre,
- fibres d'acier,
- fibres de bambou, ou
une combinaison de plusieurs desdits matériaux.
